# EUROPÄISCHE PATENTANMELDUNG

(11) **EP 2 328 109 A1**
(43) Veröffentlichungstag der Anmeldung: **01.06.2011**
(21) Anmeldenummer: 10014511.9
(22) Anmeldetag: 11.11.2010
(51) Int. Cl.: G06K 7/00

(54) **Lesergerät für eine elektrische Speicherkarte, insbesondere für eine Microkarte**

(30) Priorität: 30.11.2009 DE 102009056391
(71) Anmelder: Amphenol-tuchel Electronics GmbH, 74080 Heilbronnn (DE)
(72) Erfinder: Braun, Gerhard, 74626 Bitzfeld (DE); Stolz, Joachim Alexander, 74354 Besigheim (DE); Göbel, Marco, 74613 Öhringen (DE); Raclawski, Alan Aloysius, 74405 Ottendorf-Gaildorf (DE)
(74) Vertreter: Wagner, Karl H.

(57) **Zusammenfassung**

Die vorliegende Erfindung betrifft einen modular aufgebauten Microkartenleser mit einem Grundkörper zur Aufnahme und Befestigung eines Kontaktelemente tragenden Kontaktblocks. Der Grundkörper weist beidseitig ein grundkörperseitiges Schwenk/Gleit-Lagerelement und einen am Grundkörper schwenk- und gleitbar gelagerten Deckel auf, vorzugsweise einen Klapp/Schiebedeckel, der wiederum beidseitig ein deckelseitiges Schwenk/Gleit-Lagerelement aufweist. Der Deckel ist über die grundkörperseitigen und die deckelseitigen Schwenk/Gleit-Lagerelemente am Grundkörper angebracht. Die grundkörperseitigen oder die deckelseitigen Schwenk/Gleit-Lagerelemente weisen dabei einen axialen Sicherungsanschlag auf, der geeignet ist die Schwenk/Gleit-Lagerelemente derart zu Sichern, dass ein unbeabsichtigtes Lösen des Grundkörpers und des Deckels verhindert wird.

## Beschreibung

Die Erfindung bezieht sich auf ein Lese- bzw. Kontaktgerät für Microkarten z.B. für Micro SD Karten kurz gesagt bezieht sich die Erfindung auf einen Microkartenleser.

Im Stand der Technik sind bereits Kartenleser für größere Kartenformate mit metallischem Deckel bekannt, welcher schwenkbar an einem Kunststoffgrundträger gelagert ist.

Beispielsweise zeigt die Druckschrift DE 10238156 A1 einen Kartenleser mit metallischem Klappdeckel, welcher eine elektrisch leitfähige Verbindung zwischen dem am dielektrischen Kontaktträger angelenkten Deckel mit dem Massepotential der Schaltung vorsieht.

In der Druckschrift DE 10 2004 015 279 ist ein Kartenleser gezeigt, welcher einen metallischen Deckel aufweist, der elektrisch über Federkontakte mit der Kartenaufnahme bzw. mit dem Kontaktträger verbunden ist. In beiden Kartenlesevorrichtungen muss jedoch ein gesonderter Kontaktsatz vorgesehen werden, der einen elektrischen Kontakt zwischen einem Leiterkreis auf der Leiterplatte und dem metallischen Deckel herstellt. Wird zusätzlich die Funktion des Verschiebens des Deckels von einer Öffnungsposition in eine Schließposition benötigt, so stellt die EP 0 947 944 hierzu eine Lösung bereit. Bei diesem Kartenleser lässt sich der metallische Deckel bezüglich dem aus Isoliermaterial bestehenden Körper verschwenken und verschieben. Nach dem Verschieben des Deckels in die Schließposition wird der Deckel galvanisch mit einer Schaltung über ebenfalls gesondert angebrachte Kontaktsätze verbunden.

Nachteilig bei diesen Kartenlesern ist, dass solche Kartenleser relativ groß gebaut sind. Wird ein Kartenleser mit einer Gesamthöhe von kleiner 1 mm benötigt, so stellt die Abstimmung der Fertigungstoleranzen des Kunststoffkontaktträgers auf den Deckel und auf die Kontaktpositionen ein Problem dar.

Ein zusätzliches Problem ist die mechanische Stabilität der Lager und Kontaktstellen. Vorzugsweise soll der Deckel nicht unter federbelasteter Vorspannung stehen, wenn keine Karte in den Deckel eingesetzt ist.

Da ein Kartenleser einer Vielzahl von Öffnungs- und Schließvorgängen standhalten muss, tritt das Problem von Materialbruch auf und als weiteres Problem ein erheblichen Verschleiß und Abrieb der Kontaktoberfläche der Kontaktierzonen zum Erden des Deckels.

Diese Erfindung bezieht sich daher insbesondere auf einen Kartenleser (im Folgenden auch kurz: Leser) mit Microkarten.

Microkarten speziell Micro SD Karten besitzen sehr kleine Abmessungen in der Größenordnung von 11 mm x 15 mm x 0,7 mm und werden häufig in sogenannten Handys verwendet.

Die erfindungsgemäßen Merkmale des Microkartenlesers können aber auch bei Lesegeräten für andere Abmessungen aufweisende elektronische Speicherkarten verwendet werden.

Die vorliegende Erfindung hat sich zum einen die Aufgabe gestellt einen Microkartenleser, speziell einen Micro SD Leser vorzusehen, der die oben erwähnten Nachteile nicht zeigt und der leicht zu bedienen und leicht zu montieren ist, und einen sicheren Betrieb ermöglicht, wobei insbesondere eine gute elektrische Abschirmwirkung erreicht wird, und wobei zum anderen sichergestellt werden soll, dass der Deckel nach der Montage durch einen gebrauchstypischen Umgang nicht mehr von dem Grundkörper getrennt werden kann.

Der erfindungsgemäße Mikrokartenleser ist vorzugsweise modular aufgebaut und weist einen Grundkörper zur Aufnahme und Befestigung eines Kontaktelemente tragenden Kontaktblocks auf, wobei der Grundkörper beidseitig ein grundkörperseitiges Schwenk/Gleit-Lagerelement aufweist. Weiterhin weist der Microkartenleser einen am Grundkörper schwenk- und gleitbar gelagerten Deckel, vorzugsweise einen Klapp/Schiebedeckel auf, der beidseitig ein deckeiseitiges Schwenk/Gleit-Lagerelement aufweist, wobei der Deckel über die grundkörperseitigen und die deckelseitigen Schwenk/Gleit-Lagerelemente am Grundkörper angebracht ist. Die grundkörperseitigen oder die deckelseitigen Schwenk/Gleit-Lagerelemente weisen einen axialen Sicherungsanschlag auf, der geeignet ist die Schwenk/Gleit-Lagerelemente derart zu Sichern, dass ein unbeabsichtigtes Lösen des Grundkörpers und des Deckels verhindert wird. Die grundkörperseitigen und deckelseitigen Schwenk/Gleit-Lagerelemente bilden in Verbindung miteinander so genannte Schwenk/Gleit-Lagermittel. Durch den genannten Sicherungsanschlag, kann vermieden werden, dass durch mechanische Einwirkung auf den Microkartenleser, kurz Leser, während eines Transports oder der üblichen Benutzung ein Separieren des Deckels und des Grundkörpers auftritt.

Der Deckel des erfindungsgemäßen Lesers kann weiterhin Deckelarme aufweisen in die ein pilzförmiger Lagerstift, welcher als Sicherungsanschlag dient, von außen in ein in dem Deckelarm ausgebildetes Loch vorzugsweise eingepresst ist. Hierbei kann die Verbindung des pilzförmigen Lagerstiftes mit dem Deckelarm auch auf andere Weise realisiert werden, wie zum Beispiel durch Kleben oder Verschweißen der beiden Komponenten.

In einem weiteren Ausführungsbeispiel eines erfindungsgemäßen Lesers ist das deckelseitige Schwenk/Gleit-Lagerelement durch einen zweiteiligen Lagerstift gebildet. Ein Teil des Lagerstiftes ist dabei einstückig mit dem Deckelarm ausgebildet. Dies kann vorzugsweise durch Tiefziehen des Lagerstiftes aus dem Deckelarm erreicht werden. Ein anderer Teil des Lagerstiftes kann in Form eines Ringes auf den ersten Teil axial vorzugsweise aufgepresst sein und bildet dabei den Sicherungsanschlag. Die Verbindung des Ringes kann hierbei außer durch Aufpressen auf den Lagerstift auch durch Kleben oder Schweißen erreicht werden. Eine derartige Vorrichtung erreicht auf kostengünstige Art eine sichere, nach der Montage des Lesers nicht mehr durch den normalen Gebrauch zu lösende Verbindung von Deckel und Grundkörper. Außerdem ist es möglich durch eine derartige Vorrichtung den Deckel und den Grundkörper getrennt voneinander zu einem Endkunden zu liefern. Dieser kann dann auf einfache Art Deckel und Grundkörper vor Ort zusammenbauen, nachdem Arbeiten im Innern des Lesers, die durch einen bereits fertig montierten Leser unnötig erschwert wären, beendet sind. In einem Ausführungsbeispiel kann das grundkörperseitige Schwenk/Gleit-Lagerelement einen zweiteiligen Lagerrahmen mit einem biegbaren Teil aufweisen, der nach dem Einsetzen des pilzförmigen Lagerstiftes zur Bildung eines Lagerschlitzes hochgebogen ist. Hierdurch ist es möglich die Verbindung von pilzförmigem Lagerstift und Deckelarm schon von Herstellerseite zu bewerkstelligen, wobei der Deckel und der Grundkörper jedoch noch nicht endgültig zu montieren ist, so dass die oben angesprochenen Vorteile auf Endkundenseite immer noch vorhanden sind und dieser dann nur noch den biegbaren Teil des Lagerrahmens in die geeignete Position zu bringen hat.

Das grundkörperseitige Schwenk/Gleit-Lagerelement kann in einem weiteren Ausführungsbeispiel einen zweiteiligen Lagerrahmen mit einem biegbaren Teil aufweisen, der nach dem axialen Aufpressen des ringförmigen Teils auf den ersten Teil hochgebogen ist. Hierbei sind die Vorzüge entsprechend dem oben genannten Ausführungsbeispiel zu beachten.

In einem Ausführungsbeispiel kann das deckelseitige Schwenk/Gleit-Lagerelement durch einen Lagerstift gebildet sein, wobei ein Teil des Lagerstiftes einstückig mit dem Deckelarm ausgebildet ist und ein anderer Teil aufweitbar ausgebildet ist, um nach einem Aufweiten den Sicherungsanschlag zu bilden. Der Lagerstift kann dabei, wie oben erwähnt, beispielsweise durch Tiefziehen aus dem Deckelarm gestaltet sein. Nach dem Tiefziehen kann eine schlitzförmige Nut in den Lagerstift eingebracht sein, die in Folge mit einem Werkzeug aufgeweitet wird, um den Sicherheitsanschlag zu bilden. Durch diese spezielle Ausgestaltung des Lagerstiftes kann eine schnelle und kostengünstige Lösung zur Erzeugung des Sicherheitsanschlags realisiert werden.

In diesem Ausführungsbeispiel weist das grundkörperseitige Schwenk/Gleit-Lagerelement einen zweiteiligen Lagerrahmen mit einem biegbaren Teil auf, der nach dem Aufweiten des aufweitbaren Teiles des Lagerstiftes zur Bildung eines Lagerschlitzes hochgebogen ist. Dieses Ausführungsbeispiel zeigt eine Kombination des oben erläuterten aufspreizbaren Lagerstiftes mit dem weiter oben erläuterten zweiteiligen Lagerrahmen. Wie in den zuvor beschriebenen Beispielen wird auch hier die Bildung des Sicherungsanschlags, in Form der Aufspreizung des Lagerstiftes, vorgenommen und erst danach eine Montage des Deckels und des Grundkörpers vorgenommen, was durch die Verwendung des zweiteiligen Lagerrahmens möglich ist.

Auch in diesem Ausführungsbeispiel ist das deckelseitige Schwenk/Gleit-Lagerelement durch einen Lagerstift gebildet, dessen einer Teil, wie schon zuvor beschrieben, einstückig mit dem Deckelarm ausgebildet ist und ein anderer Teil verformbar ausgebildet ist, um nach einem Verformen den Sicherungsanschlag zu bilden. Die Verformung des anderen Teiles des Lagerstiftes ist hierbei vorzugsweise durch ein Abplatten dieses Teiles realisiert.

Das grundkörperseitige Schwenk/Gleit-Lagerelement weist auch in diesem weiteren Ausführungsbeispiel einen zweiteiligen Lagerrahmen mit einem festen und einem biegbaren Teil auf. Der biegbare Teil befindet sich in diesem Ausführungsbeispiel an der Stirnseite des Grundkörpers und bildet nach dem Verformen des verformbaren Teiles des Lagerstiftes durch das Hochbiegen des biegbaren Teils den Lagerschlitz. Die Verbindung des festen Teils und des biegbaren Teils kann hierbei über eine Presspassung gesichert sein, was ein Lösen der beiden Teile verhindern kann.

In einem weiteren Ausführungsbeispiel kann ein deckelseitiges, flaches Stützblech beidseitig im Bereich des grundkörperseitigen und/oder deckelseitigen Schwenk/Gleit-Lagerelements derart angeordnet sein, dass dieses nach einer Montage des Deckels, durch Verbiegen von innen gegen den Deckelarm drückt und dadurch den Sicherungsanschlag bildet. Auch in dieser Ausführung kann der Lagerstift einstückig, auf die oben beschriebene Weise, mit dem Deckelarm ausgeführt sein. Das Stützblech liegt dabei nach dem Verbiegen in einer Ebene mit einer Deckeloberfläche. Der Deckelarm kann weiterhin einen Vorsprung aufweisen, auf den das Stützblech nach dem Verbiegen wirkt, wodurch die Kontaktfläche zwischen Stützblech und Deckelarm minimiert werden kann.

Des Weiteren kann in einem Ausführungsbeispiel ein deckelseitiges Stützblech beidseitig im Bereich des grundkörperseitigen und/oder deckelseitigen Schwenk/Gleit-Lagerelements angeordnet sein, das nach einer Montage des Deckels durch Verbiegen in eine C-Form gebracht wird. Hierbei drückt es von innen gegen den Deckelarm wodurch der Sicherungsanschlag gebildet wird. Das Stützblech bildet dabei anfänglich eine Ebene mit der Deckeloberfläche und wird während des Verbiegens nach hinten unten in die schon genannte C-Form gebracht.

In diesem Ausführungsbeispiel ist ein äußerer biegbarer Deckelarm beidseitig im Bereich des grundkörperseitigen und/oder deckelseitigen Schwenk/Gleit-Lagerelements angeordnet. Vor einem Verbiegen der biegbaren Deckelarme liegen diese parallel zur Oberfläche des Deckels. Nach der Montage des Deckels können die biegbaren Deckelarme durch Verbiegen in einer Position derart angeordnet sein, dass sie von außen gegen das grundkörperseitige Schwenk/Gleit-Lagerelement drücken und dadurch den Sicherungsanschlag bilden. Das deckelseitige Schwenk/Gleit-Lagerelement, also der Lagerstift, kann hierbei wie oben beschrieben, vorzugsweise einstückig mit dem Deckelarm ausgebildet sein.

In einem weiteren Ausführungsbeispiel kann der Grundkörper ein grundkörperseitiges, U-förmiges Stützblech im Bereich der grundkörperseitigen und/oder deckelseitigen Schwenk/Gleit-Lagerelemente aufweisen. Nach einer Montage des Deckels kann dieses derart angeordnet sein, dass jeweils ein Ende des U-förmigen Stützblechs von innen gegen den Deckelarm drückt und dadurch den Sicherungsanschlag bildet, wobei das deckelseitige Schwenk/Gleit-Lagerelement einstückig mit dem Deckelarm ausgebildet ist. Das U-förmige Stützblech kann hierbei durch Kleben, Schweißen oder eine andere Verbindungstechnik in den Grundkörper eingebracht sein.

Ein weiteres Ausführungsbeispiel zeigt ein grundkörperseitiges, L-förmiges Stützblech, beidseitig im Bereich der grundkörperseitigen und/oder deckelseitigen Schwenk/Gleit-Lagerelemente. Nach einer Montage des Deckels, können diese derart angeordnet sein, dass jeweils ein Ende des L-förmigen Stützblechs von innen gegen den Deckelarm drückt und dadurch den Sicherungsanschlag bildet, wobei das deckelseitige Schwenk/Gleit-Lagerelement einstückig mit dem Deckelarm ausgebildet ist und das L-förmige Stützblech jeweils einen Micro SD Karten Anschlag oder Kartenstopblech aufweist.

Des Weiteren kann in einem Ausführungsbeispiel ein Kartenstopblech an einem hinteren Ende des Grundkörpers angeordnet sein, welches das Einschieben einer Micro SD Karte stoppt und dadurch eine Beschädigung der Micro SD Karte und/oder des Lesers verhindern kann.

Weitere Vorteile, Ziele und Einzelheiten der Erfindung ergeben sich aus der Beschreibung eines Ausführungsbeispiels anhand der Zeichnung; in der Zeichnung zeigt:
- Fig. 1: eine perspektivische Draufsicht auf ein erstes Ausführungsbeispiel eines erfindungsgemäßen Kartenlesers;
- Fig. 2: eine perspektivische Detailansicht eines Schwenk/Gleitlagers mit separiertem pilzförmigem Lagerstift;
- Fig. 3: eine perspektivische Detailansicht eines Schwenk/Gleitlagers wie in Fig. 2 aus einer anderen Perspektive mit eingesetztem pilzförmigem Lagerstift;
- Fig. 4: eine perspektivische Detailansicht eines Schwenk/Gleitlagers eines zweiten Ausführungsbeispiels eines erfindungsgemäßen Kartenlesers mit separiertem pilzförmigen Lagerstift;
- Fig. 5: eine perspektivische Draufsicht auf ein drittes Ausführungsbeispiel eines erfindungsgemäßen Kartenlesers mit ringförmigem Sicherungsanschlag;
- Fig. 6: eine perspektivische Detailansicht eines Schwenk/Gleitlagers mit auf dem Lagerstift aufgepresstem ringförmigen Sicherungsanschlag;
- Fig. 7: eine perspektivische Detailansicht eines Schwenk/Gleitlagers eines vierten Ausführungsbeispiels eines erfindungsgemäßen Kartenlesers mit auf dem Lagerstift aufgepresstem ringförmigen Sicherungsanschlag;
- Fig. 8: eine perspektivische Draufsicht auf ein fünftes Ausführungsbeispiel eines erfindungsgemäßen Kartenlesers mit geschlitztem Lagerstift;
- Fig. 9: eine perspektivische Detailansicht eines Schwenk/Gleitlagers mit aufgespreiztem, geschlitzten Lagerstift als Sicherungsanschlag;
- Fig. 10: eine perspektivische Detailansicht eines Schwenk/Gleitlagers eines sechsten Ausführungsbeispiels eines erfindungsgemäßen Kartenlesers mit aufgespreiztem Lagerstift als Sicherungsanschlag;
- Fig. 11: eine perspektivische Draufsicht auf ein siebtes Ausführungsbeispiel eines erfindungsgemäßen Kartenlesers mit abgeplattetem Lagerstift als Sicherungsanschlag;
- Fig. 12: eine perspektivische Detailansicht eines Schwenk/Gleitlagers mit abgeplattetem Lagerstift als Sicherungsanschlag;
- Fig. 13: eine perspektivische Detailansicht eines Schwenk/Gleitlagers eines achten Ausführungsbeispiels eines erfindungsgemäßen Kartenlesers mit abgeplattetem Lagerstift als Sicherungsanschlag;
- Fig. 14: eine perspektivische Draufsicht auf ein neuntes Ausführungsbeispiel eines erfindungsgemäßen Karteniesers mit einem deckelseitigen Stützblech als Sicherungsanschlag;
- Fig. 15: eine Draufsicht auf das Ausführungsbeispiel aus Fig. 13;
- Fig. 16: eine perspektivische Detailansicht eines Schwenk/Gleitlagers des Ausführungsbeispiels aus Fig. 13;
- Fig. 17: eine perspektivische Draufsicht auf ein zehntes Ausführungsbeispiel eines erfindungsgemäßen Kartenlesers mit einem deckelseitigen C-förmigen Stützblech als Sicherungsanschlag;
- Fig. 18: eine Draufsicht auf das Ausführungsbeispiel aus Fig. 17;
- Fig. 19: eine perspektivische Detailansicht eines Schwenk/Gleitlagers des Ausführungsbeispiels aus Fig. 17;
- Fig. 20: eine perspektivische Draufsicht auf ein elftes Ausführungsbeispiel eines erfindungsgemäßen Kartenlesers mit einem zusätzlichen äußeren Deckelarm als Sicherungsanschlag;
- Fig. 21: eine Detailansicht eines Schwenk/Gleitiagers des Ausführungsbeispiels aus Fig. 20;
- Fig. 22: eine perspektivische Detailansicht eines Schwenk/Gleitlagers des Ausführungsbeispiels aus Fig. 20;
- Fig.23: eine perspektivische Draufsicht auf ein zwölftes Ausführungsbeispiel eines erfindungsgemäßen Kartenlesers mit einem U-förmigen inneren Stützblech als Sicherungsanschlag;
- Fig. 24: eine Draufsicht auf das Ausführungsbeispiel aus Fig. 23;
- Fig. 25: eine perspektivische Detailansicht eines Schwenk/Gleitlagers des Ausführungsbeispiels aus Fig. 23;

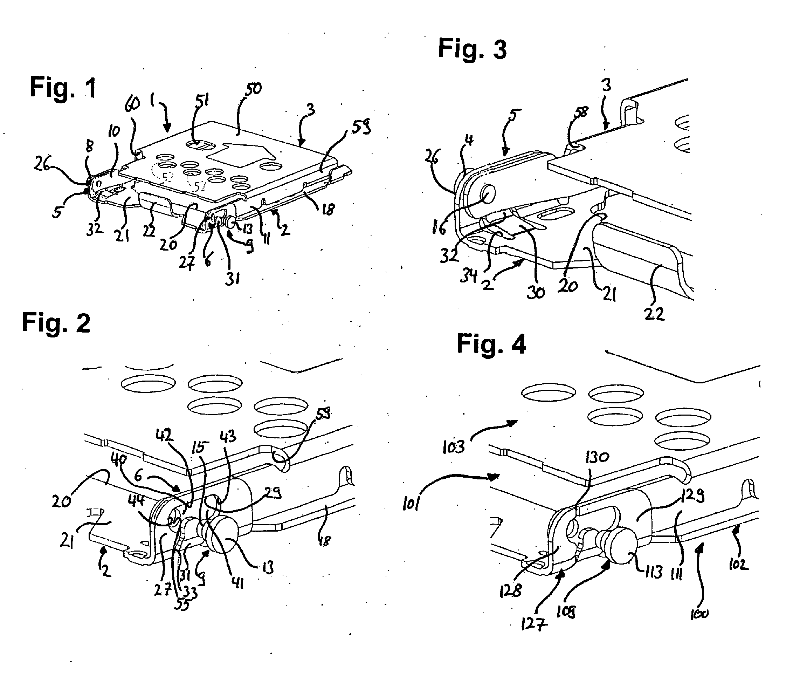

Ein erstes Ausführungsbeispiel eines erfindungsgemäßen Microkartenlesers 1, insbesondere eines Micro SD Kartenlesers ist in den Figuren 1 ― 3 gezeigt, wobei wichtige Einzelheiten in den Fig. 2-3 dargestellt sind.

Wie in Fig. 1 gezeigt weist der Microkartenleser (kurz: Leser) 1 eine gezeigte Karten-und Kontaktblockaufnahmevorrichtung 10 auf. Die Karten- und Kontaktblockaufnahmevorrichtung 10 ihrerseits weist wie in Fig. 1 - 3 gezeigt, einen Kontaktblockaufnahmekörper bzw. Grundkörper (bzw. Rahmen) 2 sowie einen Klapp/Schiebedeckel oder kurz Deckel 3 auf. Der Grundkörper 2 besteht vorzugsweise aus Metallblech. Der zur Aufnahme einer Microkarte ausgebildete Deckel 3 besteht ebenfalls vorzugsweise aus Metallblech.

Der Deckel 3 ist durch Scharniermittel insbesondere Schwenk/Gleit-Lagermittel am Grundkörper 2 schwenk- bzw. klappbar und gleitbar gelagert. Die Schwenk/Gleit-Lagermittel umfassen wie beispielsweise in Fig. 1 gezeigt, beidseitig am Leser 1 angebracht, ein grundkörperseitiges Schwenk/Gleit-Lagerelement 5 und ein grundkörperseitiges Schwenk-/Gleit-Lagerelement 6.

Der Deckel 3 weist ferner deckelseitige Schwenk-/Gleit-Lagerelemente auf, die beidseitig am Leser 1 im Bereich der grundkörperseitigen Schwenk-/Gleit-Lagerelemente 5, 6 angeordnet sind. Die deckelseitigen Schwenk-/Gleit-Lagerelemente werden durch einen pilzförmigen Lagerstift 8 und einen pilzförmigen Lagerstift 9 gebildet. In Fig. 1 ist der pilzförmige Lagerstift 8 in einen Deckelarm 10 (wird noch näher erläutert) eingepresst, d.h. nach einer Montage, abgebildet und der pilzförmige Lagerstift 9 ist separiert dargestellt, d.h. vor der Montage. Der pilzförmige Lagerstift 8, 9 weist an einem Ende einen verbreiterten Teil auf, der als Sicherungsanschlag 13, 14 dient und ein Lösen des Deckels 3 nach der Montage an den Grundkörper 2 verhindert. An einem anderen Ende weist der pilzförmige Lagerstift 8,9 einen verjüngten Teil 15, 16 auf, der zur Montage des Deckels 3 in den Deckelarm 10, 11 eingepresst wird.

Die in den Figuren 1 bis 3 gezeigte Karten- und Kontaktblockaufnahmevorrichtung 10 und insbesondere auch der Microkartenleser 1 gemäß den übrigen Figuren ist im großen und ganzen entsprechend dem Umriss einer Micro SD Karte gestaltet, die im Bereich der Kartenkontakte etwas schmäler ist.

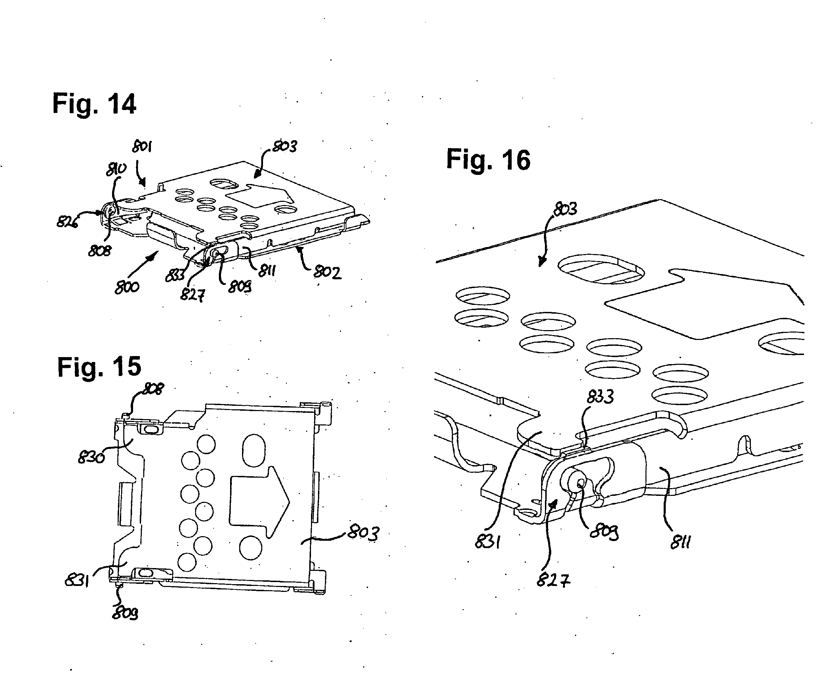

Im Folgenden werden die beiden längeren Seiten des Microkartenlesers 1, vgl. beispielsweise Fig. 15, als Längsseiten, und die quer dazu verlaufenden Querseiten als vordere Querseite und als hintere Querseite bezeichnet.

Der Grundkörper 2 ist wie in Fig. 1 gezeigt, vorzugsweise aus Metallblech hergestellt und weist eine Grundplatte 18 auf, die eine Aussparung bzw. Ausnehmung 20 besitzt, sodass als eine Begrenzung ein Steg 21 gebildet wird. Der Grundkörper 2 kann deshalb auch als Rahmen bezeichnet werden.

In ihrem in Karteneinsteckrichtung hinteren Bereich bildet die Grundplatte 18 mittig einen Anschlag 22 für die Micro SD Karte.

Ebenfalls im hinteren Bereich der Grundplatte 18 sind beidseitig Lagerplatten 26 und 27 bezüglich der Grundplatte 18 hochgebogen. In jeder der Lagerplatten 26, 27 ist jeweils eine Lageröffnung 28 bzw. 29 ausgebildet. Diese Lageröffnungen 28, 29 arbeiten mit den beidseitig am Deckel 3 ausgebildeten pilzförmigen Lagerstiften 8 und 9, zusammen.

In die beiden Lageröffnungen 28 und 29 ragt jeweils eine Lagerzunge 31 bzw. 32. Die Lagerzungen 31, 32 sind, in Folge ihrer aus der Grundplatte 18 (unter Bildung von Schlitzen 33, 34) herausgestanzten Arme 29, 30 (Fig. 3), federnd. Vorzugsweise sind die Lagerarme 29, 30 der Zungen 31, 32 wie in Fig. 3 gezeigt etwas aus der durch die Grundplatte 18 aufgespannten Ebene herausgebogen. Es ist aber sichergestellt, dass die von den Lagerplatten 26, 27 aufgespannten Ebenen im Wesentlichen in einer anderen Ebene verlaufenen, als die von den Zungen 31, 32 aufgespannten Ebenen.

Die Lageröffnungen 28, 29 und die Zungen 31, 32 bilden zusammen mit den pilzförmigen Lagerstiften 8,9 jeweils die Schwenk-/Gleit-Lagermittel.

Die Form der Lageröffnungen 28, 29 ist deutlicher in Fig. 2, am Beispiel der Lageröffnung 29 veranschaulicht, was aber in entsprechender Weise auch für die Lageröffnung 28 gilt.

Die Lageröffnung 29 weist (vgl. Fig. 2) zwei entgegengesetzt liegende im Wesentlichen halbkreisförmige Begrenzungsflächen 43, 44 auf, die oben durch eine geradlinige Lauf- bzw. Begrenzungsfläche 42 verbunden sind. Im unteren Bereich gehen die Begrenzungsflächen 43, 44 symmetrisch in eine nasenförmige Gestalt über. Wie in Fig. 2 gezeigt, geht die geradlinige Lauffläche 42 in die Begrenzungsflächen 43, 44 über. Auf diese Weise werden die beiden durch die Lagerzunge 31 getrennten Lagerstiftaufnahmeräume 40, 41 gebildet.

Der Klapp-/Schiebedeckel 3

Der Deckel 3 weist im Wesentlichen eine ebene Deckelgrundplatte 50 auf, die mit Öffnungen 51, 52 ausgestattet ist, um Zugang zu Kontaktelementen eines Kontaktblocks zu erlangen. Die Deckelgrundplatte 50 (vgl. Fig. 1) ist derart geformt, dass an ihren beiden Längsseiten am in Einsteckrichtung vorderen Ende Abwinklungsteile 59, 60 gebildet werden.

Im in Fig. 1 rechten oder in Einsteckrichtung hinteren Bereich sind beidseitig an den Längsseiten der Deckelgrundplatte 50 die Deckelarme 10, 11 geformt, welche an ihren freien Enden Öffnungen 54, 55 aufweisen, zum aufnehmen der bereits erwähnten pilzförmigen Lagerstifte 8, 9. Jeder pilzförmige Lagerstift 8, 9 bildet kreiszylindrische Außenoberflächen, die als Gleitflächen bei der Verschiebung des Deckels 3 wirken.

Wie in Fig. 1 gezeigt, sind die Deckelarme 10, 11 insbesondere auch in Folge der Ausschnitte 58 und 59 federnd. Die vorzugsweise etwas nach innen gebogenen Deckelarme 10, 11 können zur Deckelzentrierung an vom Kontaktträger bzw. Kontaktblock gebildeten Führungsflächen gleiten.

Im Folgenden wird anhand der Figur 4 ein zweites Ausführungsbeispiel eines Microkartenlesers 100 beschrieben. Der Microkartenleser 100 weist ähnlich wie beim ersten Ausführungsbeispiel eine Karten- und Kontaktblockaufnahmevorrichtung 101 auf, in die zur Bildung des Microkartenlesers 100 ein Kontaktblock eingesetzt ist. Die Kontaktblockaufnahmevorrichtung 101 weist einen Kontaktblockaufnahmekörper 102, im Folgenden kurz Grundkörper 102 bzw. Rahmen 102 sowie einen daran durch Schwenk-/ Gleit-Lagermittel angeordneten Klapp-/ Schiebedeckel 103 auf. Der Grundkörper 102 weist an seinem hinteren Ende beidseitig Lagerplatten 126, 127 auf. Der Deckel 103 weist an seinem hinteren Ende, jeweils an den Längsseiten einen Deckelarm 111 auf. Dieses Ausführungsbeispiel veranschaulicht deutlich die Möglichkeit der Einpressung eines pilzförmigen Lagerstiftes 109 in den Deckelarm 111, bevor der Deckel 103 und der Grundkörper 102 zusammen montiert werden. Der pilzförmige Lagerstift 108 besitzt an einem Ende einen verbreiterten Teil 113, der als Sicherungsanschlag dient. Die Lagerplatte 127 besteht aus einem hinteren Lagerplattenteil 128 und einem vorderen Lagerplattenteil 129, die durch eine Aussparung 130 voneinander getrennt sind.

Der hintere Lagerplattenteil 128 bildet vor der Montage des Deckels eine Ebene mit dem Grundkörper 102 und wird nach dem Einpressen des pilzförmigen Lagerstiftes 109 in seine in Figur 4 dargestellte Position hochgebogen, um dadurch die Lagerplatte 127 zu bilden.

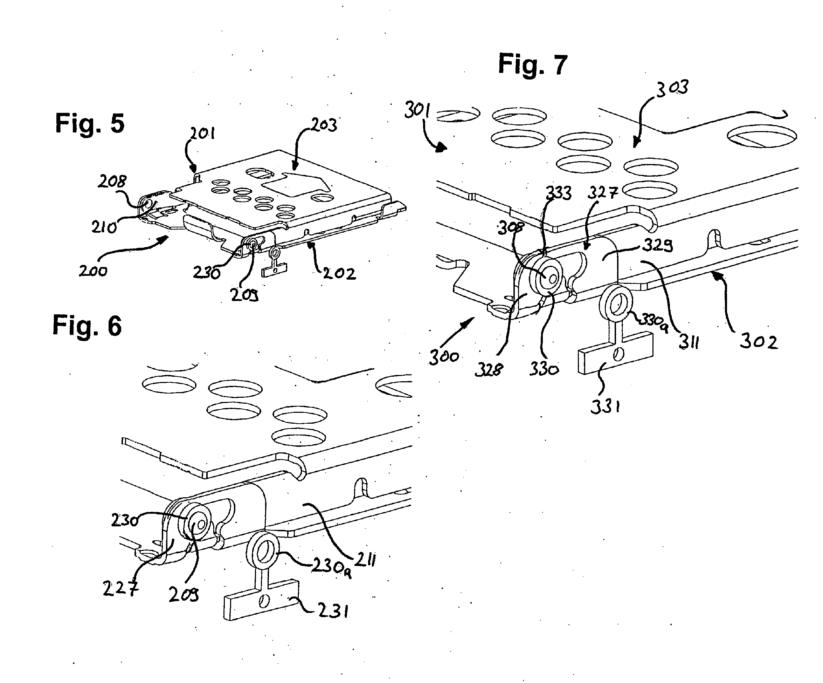

Figur 5 zeigt ein drittes Ausführungsbeispiel eines Microkartenlesers 200, das im Folgenden näher erläutert wird. Der Microkartenleser 200 weist wiederum ähnlich wie beim ersten Ausführungsbeispiel eine Karten- und Kontaktblockaufnahmevorrichtung 201 auf, in die zur Bildung des Microkartenlesers 200 ein Kontaktblock eingesetzt ist. Die Kontaktblockaufnahmevorrichtung 201 weist einen Kontaktblockaufnahmekörper 202, im Folgenden kurz Grundkörper 202 bzw. Rahmen 202 sowie einen daran durch Schwenk-/ Gleit-Lagermittel angeordneten Klapp-/ Schiebedeckel 203 auf. Der Deckel 203 weist an seinem hinteren Ende, jeweils an den Längsseiten Deckelarme 210, 211 auf, was auch in Figur 6 gut zu erkennen ist.

Die Deckelarme 210, 211 weisen jeweils an ihrem hinteren Ende deckelseitige Schwenk/Gleit - Lagerelemente, die auch als Lagerstifte 208, 209 bezeichnet werden auf, die vorzugsweise aus dem Material der Deckelarme 210, 211 herausgedrückt sind. Diese Lagerstifte 208, 209 ragen von innen durch grundkörperseitige Schwenk/Gleit ― Lagerelemente, welche Lagerplatten 226, 227 aufweisen, die am hinteren Ende des Grundkörpers 202 angeordnet sind. Die Lagerstifte 208, 209 bilden zusammen mit den Lagerplatten 226, 227 die Schwenk/Gleit ― Lagermittel zur Lagerung des Deckels 203.

Die Lagerstifte 208, 209 weisen weiterhin an einem durch die Lagerplatten 226, 227 durchragenden Ende einen ringförmigen Sicherungsanschlag 230 auf. Dieser ringförmige Sicherungsanschlag 230 wird auf die Lagerstifte 208, 209 vorzugsweise aufgepresst nachdem der Deckel 203 an den Grundkörper 202 montiert wurde und verhindert dadurch ein unbeabsichtigtes Lösen des Deckels 203 vom Grundkörper 202.

In den Figuren 5 und 6 ist zusätzlich ein ringförmiger Sicherungsanschlag 230a gezeigt, der den Zustand vor dem Aufpressen des Sicherungsanschlags 230 auf den Lagerstift 208, 209 darstellt. Zur besseren Handhabung des Sicherungsanschlags 230a weist dieser eine Halterung 231 auf, die nach dem Aufpressen auf die Lagerstifte 208, 209 abgebrochen wird. Hierzu verfügt der Sicherungsanschlag 230a zusätzlich über eine Sollbruchstelle, die jedoch in den Figuren nicht gezeigt ist.

Figur 7 zeigt ein viertes Ausführungsbeispiel eines erfindungsgemäßen Microkartenlesers 300. Der Microkartenleser 300 weist ähnlich wie beim zweiten Ausführungsbeispiel eine Karten- und Kontaktblockaufnahmevorrichtung 301 auf, in die zur Bildung des Microkartenlesers 300 ein Kontaktblock eingesetzt ist. Die Kontaktblockaufnahmevorrichtung 301 weist einen Kontaktblockaufnahmekörper 302, im Folgenden kurz Grundkörper 302 bzw. Rahmen 302 sowie einen daran durch Schwenk-/ Gleit-Lagermittel angeordneten Klapp-/ Schiebedeckel 303 auf. Der Grundkörper 302 weist an seinem hinteren Ende beidseitig Lagerplatten 326, 327 auf.

Der Deckel 303 weist an seinem hinteren Ende, jeweils an den Längsseiten einen Deckelarm 311 auf. Dieses Ausführungsbeispiel veranschaulicht, ähnlich wie im zweiten Ausführungsbeispiel die Möglichkeit der Aufpressung eines ringförmigen Sicherungsanschlags 330 auf einen Lagerstift 308, bevor der Deckel 303 und der Grundkörper 302 zusammen montiert werden. Der Lagerstift 308 besitzt an einem Ende einen verbreiterten Teil, der durch den aufgepressten ringförmigen Sicherungsanschlag 330 gebildet wird. Die Lagerplatte 327 besteht aus einem hinteren Lagerplattenteil 328 und einem vorderen Lagerplattenteil 329, die durch eine Aussparung 333 voneinander getrennt sind.

Der hintere Lagerplattenteil 328 bildet vor der Montage des Deckels eine Ebene mit dem Grundkörper 302 und wird nach dem Aufpressen des ringförmigen Sicherungsanschlags 330 auf den Lagerstift 308 in seine in Figur 7 dargestellte Position hochgebogen, um dadurch die Lagerplatte 327 zu bilden.

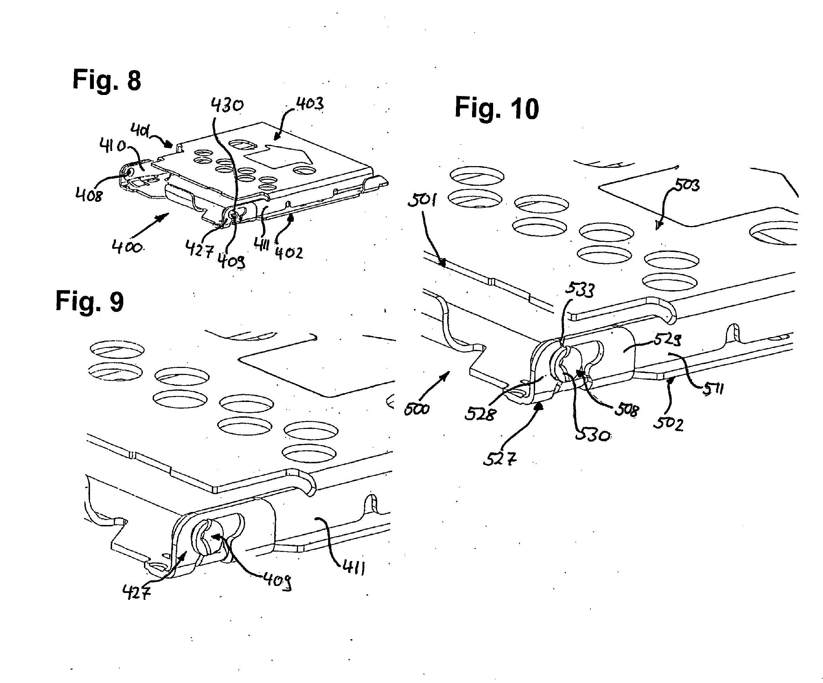

Die Figuren 8 und 9 zeigen ein fünftes Ausführungsbeispiel eines Microkartenlesers 400, das im Folgenden näher erläutert wird. Der Microkartenleser 400 weist wiederum ähnlich wie beim ersten Ausführungsbeispiel eine Karten- und Kontaktblockaufnahmevorrichtung 401 auf, in die zur Bildung des Microkartenlesers 400 ein Kontaktblock eingesetzt ist. Die Kontaktblockaufnahmevorrichtung 401 weist einen Kontaktblockaufnahmekörper 402, im Folgenden kurz Grundkörper 402 bzw. Rahmen 402 sowie einen daran durch Schwenk-/ Gleit-Lagermittel angeordneten Klapp-/ Schiebedeckel 403 auf. Der Deckel 403 weist an seinem hinteren Ende, jeweils an den Längsseiten Deckelarme 410, 411 auf, was auch in Figur 9 gut zu erkennen ist.

Die Deckelarme 410, 411 weisen jeweils an ihrem hinteren Ende deckelseitige Schwenk/Gleit ― Lagerelemente, die auch als Lagerstifte 408, 409 bezeichnet werden auf, die vorzugsweise aus dem Material der Deckelarme 410, 411 herausgedrückt sind. Diese Lagerstifte 408, 409 ragen von innen durch grundkörperseitige Schwenk/Gleit ― Lagerelemente, welche Lagerplatten 426, 427 aufweisen und am hinteren Ende des Grundkörpers 402 angeordnet sind. Die Lagerstifte 408, 409 bilden zusammen mit den Lagerplatten 426, 427 die Schwenk/Gleit ― Lagermittel zur Lagerung des Deckels 403.

Die Lagerstifte 408, 409 weisen weiterhin an einem durch die Lagerplatten 426, 427 durchragenden Ende eine schlitzförmige Nut 430 auf. Diese schlitzförmige Nut 430 wird vorzugsweise aufgespreizt und bildet dadurch einen Sicherungsanschlag nachdem der Deckel 403 an den Grundkörper 402 montiert wurde und verhindert somit ein unbeabsichtigtes Lösen des Deckels 403 vom Grundkörper 402.

Figur 10 zeigt ein sechstes Ausführungsbeispiel eines erfindungsgemäßen Microkartenlesers 500. Der Microkartenleser 500 weist ähnlich wie beim vierten Ausführungsbeispiel eine Karten- und Kontaktblockaufnahmevorrichtung 501 auf, in die zur Bildung des Microkartenlesers 500 ein Kontaktblock eingesetzt ist. Die Kontaktblockaufnahmevorrichtung 501 weist einen Kontaktblockaufnahmekörper 502 oder Grundkörper 502 sowie einen daran durch Schwenk-/ Gleit-Lagermittel angeordneten Klapp-/ Schiebedeckel 503 auf. Der Grundkörper 502 weist an seinem hinteren Ende beidseitig Lagerplatten 526, 527 auf.

Der Deckel 503 weist an seinem hinteren Ende, jeweils an den Längsseiten einen Deckelarm 511 auf. Dieses Ausführungsbeispiel veranschaulicht, ähnlich wie im zweiten und vierten Ausführungsbeispiel die Möglichkeit der Aufspreizung einer schlitzförmigen Nut 530 eines Lagerstiftes 508, bevor der Deckel 503 und der Grundkörper 502 zusammen montiert werden. Der Lagerstift 508 besitzt an einem Ende einen verbreiterten Teil, der durch das Aufspreizen der schlitzförmigen Nut 530 gebildet wird und dadurch einen Sicherungsanschlag bildet. Die Lagerplatte 527 besteht aus einem hinteren Lagerplattenteil 528 und einem vorderen Lagerplattenteil 529, die durch eine Aussparung 533 voneinander getrennt sind.

Der hintere Lagerplattenteil 528 bildet vor der Montage des Deckels eine Ebene mit dem Grundkörper 502 und wird nach dem Aufspreizen der schlitzförmigen Nut 530 des Lagerstiftes 508 in seine in Figur 10 dargestellte Position hochgebogen, um dadurch die Lagerplatte 527 zu bilden.

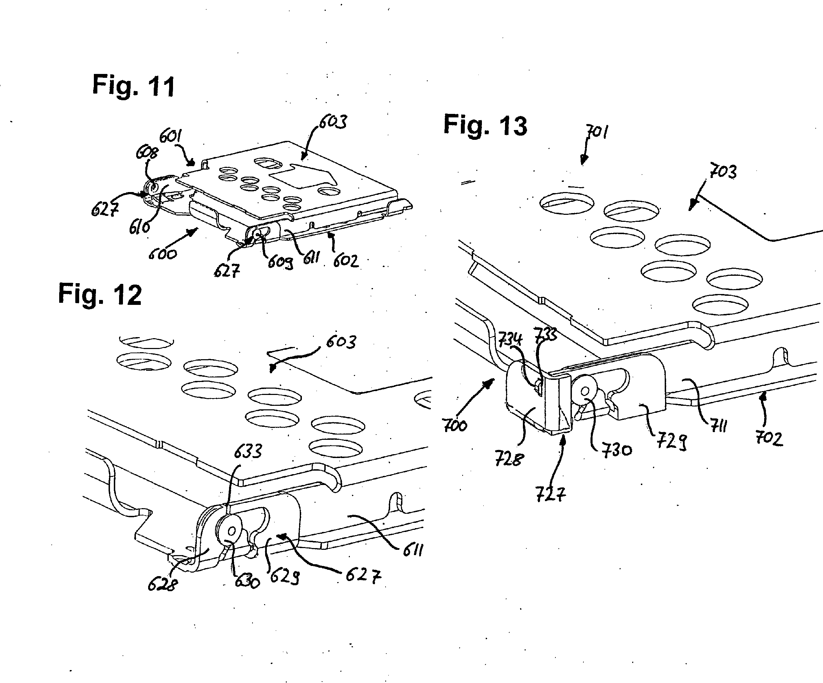

Die Figuren 11 und 12 zeigen ein siebtes Ausführungsbeispiel eines erfindungsgemäßen Microkartenlesers 600. Der Microkartenleser 600 weist ähnlich wie beim sechsten Ausführungsbeispiel eine Karten- und Kontaktblockaufnahmevorrichtung 601 auf, in die zur Bildung des Microkartenlesers 600 ein Kontaktblock eingesetzt ist. Die Kontaktblockaufnahmevorrichtung 601 weist einen Kontaktblockaufnahmekörper 602 oder Grundkörper 602 sowie einen daran durch Schwenk-/ Gleit-Lagermittel angeordneten Klapp-/ Schiebedeckel 603 auf. Der Grundkörper 602 weist an seinem hinteren Ende beidseitig Lagerplatten 626, 627 auf.

Der Deckel 603 weist an seinem hinteren Ende, jeweils an den Längsseiten einen Deckelarm 610, 611 auf. Dieses Ausführungsbeispiel veranschaulicht, ähnlich wie im zweiten und vierten Ausführungsbeispiel die Möglichkeit der Abplattung eines Endes 630 eines Lagerstiftes 608, bevor der Deckel 603 und der Grundkörper 602 zusammen montiert werden. Der Lagerstift 608 besitzt an einem Ende einen verbreiterten Teil, der durch das Abplatten des Endes 630 des Lagerstiftes 608 gebildet wird und dadurch einen Sicherungsanschlag bildet. Die Lagerplatte 627 besteht aus einem hinteren Lagerplattenteil 628 und einem vorderen Lagerplattenteil 629, die durch eine Aussparung 633 voneinander getrennt sind.

Der hintere Lagerplattenteil 628 bildet vor der Montage des Deckels eine Ebene mit dem Grundkörper 602 und wird nach dem Abplatten des Endes 630 des Lagerstiftes 608 in seine in den Figuren 11 und 12 dargestellte Position hochgebogen, um dadurch die Lagerplatte 627 zu bilden.

Die Figur 13 zeigt ein achtes Ausführungsbeispiel eines erfindungsgemäßen Microkartenlesers 700. Der Microkartenleser 700 weist ähnlich wie beim siebten Ausführungsbeispiel eine Karten- und Kontaktblockaufnahmevorrichtung 701 auf, in die zur Bildung des Microkartenlesers 700 ein Kontaktblock eingesetzt ist. Die Kontaktblockaufnahmevorrichtung 701 weist einen Kontaktblockaufnahmekörper 702 oder Grundkörper 702 sowie einen daran durch Schwenk-/ Gleit-Lagermittel angeordneten Klapp-/ Schiebedeckel 703 auf. Der Grundkörper 702 weist an seinem hinteren Ende beidseitig Lagerplatten 726, 727 auf.

Der Deckel 703 weist an seinem hinteren Ende, jeweils an den Längsseiten einen Deckelarm 710, 711 auf. Dieses Ausführungsbeispiel veranschaulicht, ähnlich wie im siebten Ausführungsbeispiel die Möglichkeit der Abplattung eines Endes 730 eines Lagerstiftes 708, bevor der Deckel 703 und der Grundkörper 702 zusammen montiert werden. Der Lagerstift 708 besitzt an einem Ende einen verbreiterten Teil, der durch das Abplatten des Endes 730 des Lagerstiftes 708 gebildet wird und dadurch einen Sicherungsanschlag bildet. Die Lagerplatte 727 besteht aus einem hinteren Lagerplattenteil 728 mit einer Öffnung 733 und einem vorderen Lagerplattenteil 729 mit einem Vorsprung 734.

Der hintere Lagerplattenteil 728 bildet vor der Montage des Deckels eine Ebene mit dem Grundkörper 702 und wird nach dem Abplatten des Endes 730 des Lagerstiftes 708 in seine in Figuren 13 dargestellte Position hochgebogen, um dadurch die Lagerplatte 727 zu bilden. Hierbei wird der Vorsprung 734 in die Öffnung 733 gepresst.

Die Figuren 14, 15 und 16 zeigen ein neuntes Ausführungsbeispiel eines Microkartenlesers 800, das im Folgenden näher erläutert wird. Der Microkartenleser 800 weist wiederum ähnlich wie beim dritten Ausführungsbeispiel eine Karten- und Kontaktblockaufnahmevorrichtung 801 auf, in die zur Bildung des Microkartenlesers 800 ein Kontaktblock eingesetzt ist. Die Kontaktblockaufnahmevorrichtung 801 weist einen Kontaktblockaufnahmekörper 802 oder Grundkörper 802 sowie einen daran durch Schwenk-/ Gleit-Lagermittel angeordneten Klapp-/ Schiebedeckel 803 auf. Der Deckel 803 weist an seinem hinteren Ende, jeweils an den Längsseiten Deckelarme 810, 811 auf, was auch in Figur15 gut zu erkennen ist. Am hinteren Ende des Deckels 803, im Bereich der Schwenk/Gleit ― Lagermittel befinden sich jeweils auf beiden Seiten Stützbleche 830 und 831, die vor der Montage aus der Ebene des Deckels 803 nach oben gebogen sind (nicht dargestellt), um eine Montage von Deckel 803 und Grundkörper 802 zu ermöglichen.

Die Deckelarme 810, 811 weisen jeweils an ihrem hinteren Ende deckelseitige Schwenk/Gleit ― Lagerelemente auf, die auch als Lagerstifte 808, 809 bezeichnet werden und die vorzugsweise aus dem Material der Deckelarme 810, 811 herausgedrückt sind. Diese Lagerstifte 808, 809 ragen von innen durch grundkörperseitige Schwenk/Gleit ― Lagerelemente, welche Lagerplatten 826, 827 aufweisen die am hinteren Ende des Grundkörpers 802 angeordnet sind. Die Lagerstifte 808, 809 bilden zusammen mit den Lagerplatten 826, 827 die Schwenk/Gleit ― Lagermittel zur Lagerung des Deckels 803. Im Bereich der deckelseitigen Schwenk/Gleit ― Lagerelemente sind an der Oberseite der Deckelarme 810, 811 Vorsprünge 833, 834 angeordnet.

Nachdem der Deckel 803 an den Grundkörper 802 montiert wurde werden die Stützbleche 830, 831 in die Position gebogen, wie sie in den Figuren 14 -15 gezeigt ist, wodurch verhindert wird, dass ein unbeabsichtigtes Lösen des Deckels 803 vom Grundkörper 802 stattfindet. Die Stützbleche 830, 831 drücken dabei von innen gegen die Deckelarme 810, 811, bzw. die Vorsprünge 833, 834 wodurch die Stützbleche 830, 831 einen Sicherungsanschlag bilden.

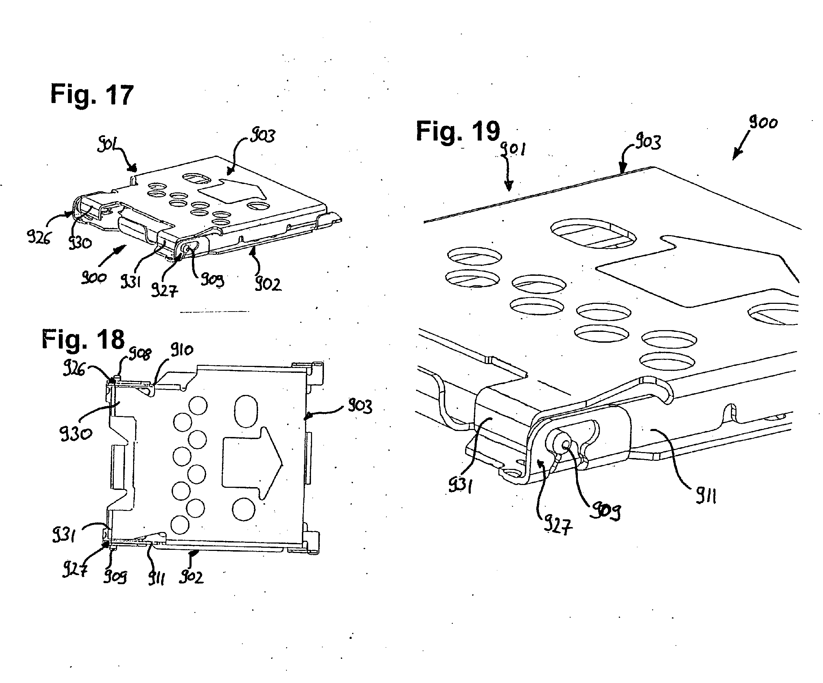

Die Figuren 17, 18 und 19 zeigen ein zehntes Ausführungsbeispiel eines Microkartenlesers 900, das im Folgenden näher erläutert wird. Der Microkartenleser 900 weist wiederum ähnlich wie beim neunten Ausführungsbeispiel eine Karten- und Kontaktblockaufnahmevorrichtung 901 auf, in die zur Bildung des Microkartenlesers 900 ein Kontaktblock eingesetzt ist. Die Kontaktblockaufnahmevorrichtung 901 weist einen Kontaktblockaufnahmekörper 902 oder Grundkörper 902 sowie einen daran durch Schwenk-/ Gleit-Lagermittel angeordneten Klapp-/ Schiebedeckel 903 auf. Der Deckel 903 weist an seinem hinteren Ende, jeweils an den Längsseiten Deckelarme 910, 911 auf, was auch in Figur 18 gut zu erkennen ist. Am hinteren Ende des Deckels 903, im Bereich der Schwenk/Gleit ― Lagermittel befinden sich jeweils auf beiden Seiten Stützbleche 930 und 931, die vor der Montage in der Ebene des Deckels 903 liegen (nicht dargestellt), um eine Montage von Deckel 903 und Grundkörper 902 zu ermöglichen.

Die Deckelarme 910, 911 weisen jeweils an ihrem hinteren Ende deckelseitige Schwenk/Gleit ― Lagerelemente auf, die auch als Lagerstifte 908, 909 bezeichnet werden und die vorzugsweise aus dem Material der Deckelarme 910, 911 herausgedrückt sind. Diese Lagerstifte 908, 909 ragen von innen durch grundkörperseitige Schwenk/Gleit ― Lagerelemente, welche Lagerplatten 926, 927 aufweisen die am hinteren Ende des Grundkörpers 902 angeordnet sind. Die Lagerstifte 908, 909 bilden zusammen mit den Lagerplatten 926, 927 die Schwenk/Gleit ― Lagermittel zur Lagerung des Deckels 903.

Nachdem der Deckel 903 an den Grundkörper 902 montiert wurde werden die Stützbleche 930, 931 in die Position gebogen, wie sie in den Figuren 17-19 gezeigt ist, wodurch verhindert wird, dass ein unbeabsichtigtes Lösen des Deckels 903 vom Grundkörper 902 stattfindet. Die Stützbleche 930, 931 drücken dabei von innen gegen die Deckelarme 910, 911, bzw. die Lagerstifte 908, 909 wodurch die Stützbleche 930, 931 einen Sicherungsanschlag bilden.

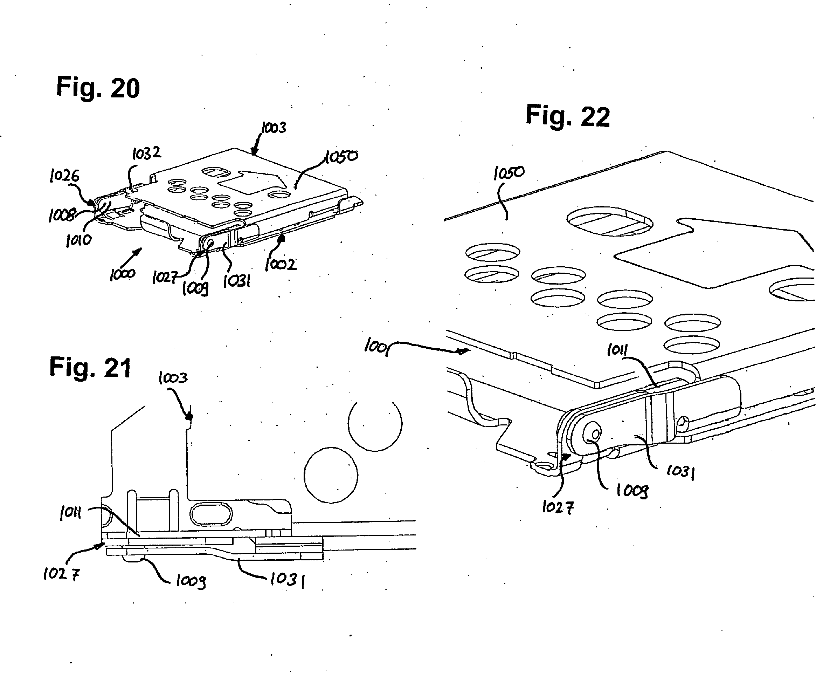

Die Figuren 20, 21 und 22 zeigen ein elftes Ausführungsbeispiel eines Microkartenlesers 1000, das im Folgenden näher erläutert wird. Der Microkartenleser 1000 weist wiederum ähnlich wie beim neunten Ausführungsbeispiel eine Karten-und Kontaktblockaufnahmevorrichtung 1001 auf, in die zur Bildung des Microkartenlesers 1000 ein Kontaktblock eingesetzt ist. Die Kontaktblockaufnahmevorrichtung 1001 weist einen Kontaktblockaufnahmekörper 1002 oder Grundkörper 1002 sowie einen daran durch Schwenk-/ Gleit-Lagermittel angeordneten Klapp-/ Schiebedeckel 1003 auf. Der Deckel 1003 weist an seinem hinteren Ende, jeweils an den Längsseiten Deckelarme 1010, 1011 auf. An einer Außenseite am hinteren Ende des Deckels 1003, im Bereich der Schwenk/Gleit - Lagermittel befinden sich jeweils auf beiden Seiten zusätzliche Deckelarme 1030 und 1031, die vor der Montage parallel zu einer Deckelgrundplatte 1050 liegen (nicht dargestellt), um eine Montage von Deckel 1003 und Grundkörper 1002 zu ermöglichen.

Die Deckelarme 1010, 1011 weisen jeweils an ihrem hinteren Ende deckelseitige Schwenk/Gleit ― Lagerelemente auf, die auch als Lagerstifte 1008, 1009 bezeichnet werden und die vorzugsweise aus dem Material der Deckelarme 1010, 1011 herausgedrückt sind. Diese Lagerstifte 1008, 1009 ragen von innen durch grundkörperseitige Schwenk/Gleit ― Lagerelemente, welche Lagerplatten 1026, 1027 aufweisen die am hinteren Ende des Grundkörpers 1002 angeordnet sind. Die Lagerstifte 1008, 1009 bilden zusammen mit den Lagerplatten 1026, 1027 die Schwenk/Gleit ― Lagermittel zur Lagerung des Deckels 1003.

Nachdem der Deckel 1003 an den Grundkörper 1002 montiert wurde werden die zusätzlichen Deckelarme 1030, 1031 in die Position gebogen, wie sie in den Figuren 20 -21 gezeigt ist, wodurch verhindert wird, dass ein unbeabsichtigtes Lösen des Deckels 1003 vom Grundkörper 1002 stattfindet. Die zusätzlichen Deckelarme 1030, 1031 werden dabei von außen auf die Lagerstifte 1008, 1009 gepresst, wodurch die zusätzlichen Deckelarme 1030, 1031 einen Sicherungsanschlag bilden.

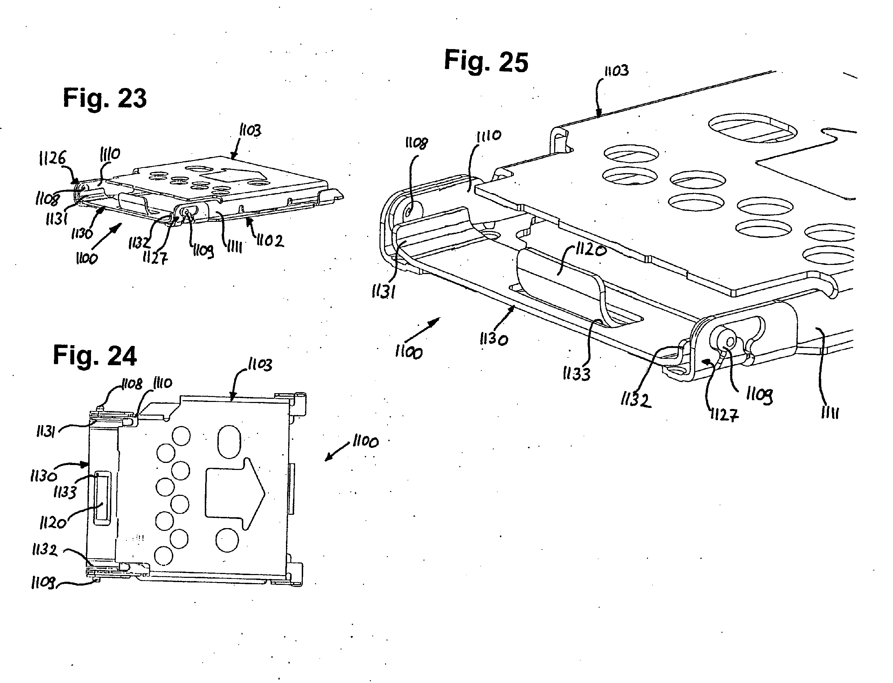

Die Figuren 23, 24 und 25 zeigen ein zwölftes Ausführungsbeispiel eines Microkartenlesers 1100, das im Folgenden näher erläutert wird. Der Microkartenleser 1100 weist wiederum ähnlich wie beim neunten Ausführungsbeispiel eine Karten-und Kontaktblockaufnahmevorrichtung 1101 auf, in die zur Bildung des Microkartenlesers 1100 ein Kontaktblock eingesetzt ist. Die Kontaktblockaufnahmevorrichtung 1101 weist einen Kontaktblockaufnahmekörper 1102 oder Grundkörper 1102 sowie einen daran durch Schwenk-/ Gleit-Lagermittel angeordneten Klapp-/ Schiebedeckel 1103 auf. Der Deckel 1103 weist an seinem hinteren Ende, jeweils an den Längsseiten Deckelarme 1110, 1111 auf, was auch in Figur 24 gut zu erkennen ist. Mittig am hinteren Ende des Grundkörpers 1102 befindet sich ein Mittenblech 1130, welches im Bereich der Schwenk/Gleit ― Lagermittel jeweils auf beiden Seiten Stützbleche 1131 und 1132 aufweist. Das Mittenblech 1130 ist vor der Montage des Deckels 1103 und des Grundkörpers 1102 noch nicht angebracht (nicht dargestellt), um die Montage von Deckel 1103 und Grundkörper 1102 zu ermöglichen. Das Mittenblech weist weiterhin mittig eine Öffnung 1133 auf, damit ein Anschlag 1120 für die Micro SD Karte durch das Mittenblech 1130 geführt werden kann.

Die Deckelarme 1110, 1111 weisen jeweils an ihrem hinteren Ende deckelseitige Schwenk/Gleit ― Lagerelemente auf, die auch als Lagerstifte 1108, 1109 bezeichnet werden und die vorzugsweise aus dem Material der Deckelarme 1110, 1111 herausgedrückt sind. Diese Lagerstifte 1108, 1109 ragen von innen durch grundkörperseitige Schwenk/Gleit ― Lagerelemente, welche Lagerplatten 1126, 1127 aufweisen die am hinteren Ende des Grundkörpers 1102 angeordnet sind. Die Lagerstifte 1108, 1109 bilden zusammen mit den Lagerplatten 1126, 1127 die Schwenk/Gleit ― Lagermittel zur Lagerung des Deckels 1103.

Nachdem der Deckel 1103 an den Grundkörper 1102 montiert wurde wird das Mittenblech 1130 in der Position auf dem Grundkörper angebracht, vorzugsweise geschweißt, wie es in den Figuren 23 -25 gezeigt ist, wodurch verhindert wird, dass ein unbeabsichtigtes Lösen des Deckels 1103 vom Grundkörper 1102 stattfindet. Die Stützbleche 1131, 1132 drücken dabei von innen gegen die Deckelarme 1110, 1111, bzw. die Lagerstifte 1108, 1109 wodurch die Stützbleche 1131, 1132 einen Sicherungsanschlag bilden.

Erfindungsgemäß wird durch den Metallrahmen und den Metalldeckel eine geringe Baugröße realisiert. Ferner kann der Metallrahmen modular bestückt werden und Wärmespannungen aufgrund unterschiedlicher Wärmeausdehnungen werden, wie oben erwähnt, vermieden.

## Patentansprüche

1. Modular aufgebauter Microkartenleser mit einem Grundkörper zur Aufnahme und Befestigung eines Kontaktelemente tragenden Kontaktblocks, wobei der Grundkörper beidseitig ein grundkörperseitiges Schwenk/Gleit-Lagerelement aufweist, und mit einem am Grundkörper schwenk- und gleitbar gelagerten Deckel, vorzugsweise einem Klapp/Schiebedeckel, der beidseitig ein deckelseitiges Schwenk/Gleit-Lagerelement aufweist, wobei der Deckel über die grundkörperseitigen und die deckelseitigen Schwenk/Gleit-Lagerelemente am Grundkörper angebracht ist, **dadurch gekennzeichnet, dass** wenigstens die grundkörperseitigen oder die deckelseitigen Schwenk/Gleit-Lagerelemente einen axialen Sicherungsanschlag aufweisen, wobei der axiale Sicherungsanschlag geeignet ist die Schwenk/Gleit-Lagerelemente derart zu Sichern, dass ein unbeabsichtigtes Lösen des Grundkörpers und des Deckels verhindert wird.

2. Vorrichtung nach Anspruch 1, **dadurch gekennzeichnet, dass** der Deckel Deckelarme aufweist und dass der Sicherungsanschlag ein pilzförmiger Lagerstift ist, der von außen in ein in dem Deckelarm ausgebildetes Loch vorzugsweise eingepresst ist.

3. Vorrichtung nach Anspruch 1, **dadurch gekennzeichnet, dass** das deckelseitige Schwenk/Gleit-Lagerelement durch einen zweiteiligen Lagerstift gebildet ist, dessen einer Teil einstückig mit dem Deckelarm ausgebildet ist und dessen anderer Teil den Sicherungsanschlag bildet und in Form eines Ringes auf den ersten Teil axial vorzugsweise aufgepresst ist.

4. Vorrichtung nach Anspruch 2, **dadurch gekennzeichnet, dass** das grundkörperseitige Schwenk/Gleit-Lagerelement einen zweiteiligen Lagerrahmen mit einem biegbaren Teil aufweist, der nach dem Einsetzen des pilzförmigen Lagerstiftes zur Bildung eines Lagerschlitzes hochgebogen ist.

5. Vorrichtung nach Anspruch 3, **dadurch gekennzeichnet, dass** das grundkörperseitige Schwenk/Gleit-Lagerelement einen zweiteiligen Lagerrahmen mit einem biegbaren Teil aufweist, der nach dem axialen Aufpressen des ringförmigen Teils auf den ersten Teil hochgebogen ist.

6. Vorrichtung nach Anspruch 1, **dadurch gekennzeichnet, dass** das deckelseitige Schwenk/Gleit-Lagerelement durch einen Lagerstift gebildet ist, wobei ein Teil des Lagerstiftes einstückig mit dem Deckelarm ausgebildet ist und ein anderer Teil aufweitbar ausgebildet ist, um nach einem Aufweiten den Sicherungsanschlag zu bilden.

7. Vorrichtung nach Anspruch 6, **dadurch gekennzeichnet, dass** das grundkörperseitige Schwenk/Gleit-Lagerelement einen zweiteiligen Lagerrahmen mit einem biegbaren Teil aufweist, der nach dem Aufweiten des aufweitbaren Teiles des Lagerstiftes zur Bildung eines Lagerschlitzes hochgebogen ist.

8. Vorrichtung nach Anspruch 1, **dadurch gekennzeichnet, dass** das deckelseitige Schwenk/Gleit-Lagerelement durch einen Lagerstift gebildet ist, wobei ein Teil des Lagerstiftes einstückig mit dem Deckelarm ausgebildet ist und ein anderer Teil verformbar ausgebildet ist, um nach einem Verformen den Sicherungsanschlag zu bilden.

9. Vorrichtung nach Anspruch 8, **dadurch gekennzeichnet, dass** das grundkörperseitige Schwenk/Gleit-Lagerelement einen zweiteiligen Lagerrahmen mit einem festen und einem stirnseitigen biegbaren Teil aufweist, der nach dem Verformen des verformbaren Teiles des Lagerstiftes zur Bildung eines Lagerschlitzes hochgebogen ist und über eine Presspassung mit dem festen Teil verbunden ist.

10. Vorrichtung nach Anspruch 1, **dadurch gekennzeichnet, dass** ein deckelseitiges, flaches Stützblech beidseitig im Bereich des grundkörperseitigen und/oder deckelseitigen Schwenk/Gleit-Lagerelements, nach einer Montage des Deckels, durch Verbiegen derart angeordnet ist, dass es von innen gegen den Deckelarm drückt und dadurch den Sicherungsanschlag bildet, wobei das deckelseitige Schwenk/Gleit-Lagerelement einstückig mit dem Deckelarm ausgebildet ist.

11. Vorrichtung nach Anspruch 1, **dadurch gekennzeichnet, dass** ein deckelseitiges Stützblech beidseitig im Bereich des grundkörperseitigen und/oder deckelseitigen Schwenk/Gleit-Lagerelements, nach einer Montage des Deckels durch Verbiegen in eine C-Form derart angeordnet ist, dass es von innen gegen den Deckelarm drückt und dadurch den Sicherungsanschlag bildet, wobei das deckelseitige Schwenk/Gleit-Lagerelement einstückig mit dem Deckelarm ausgebildet ist.

12. Vorrichtung nach Anspruch 1, **dadurch gekennzeichnet, dass** ein äußerer biegbarer Deckelarm beidseitig im Bereich des grundkörperseitigen und/oder deckelseitigen Schwenk/Gleit-Lagerelements angeordnet ist, der nach einer Montage des Deckels durch Verbiegen in einer Position derart angeordnet ist, dass er von außen gegen das grundkörperseitige Schwenk/Gleit-Lagerelement drückt und dadurch den Sicherungsanschlag bildet, wobei das deckelseitige Schwenk/Gleit-Lagerelement einstückig mit dem Deckelarm ausgebildet ist.

13. Vorrichtung nach Anspruch 1, **dadurch gekennzeichnet, dass** ein grundkörperseitiges, U-förmiges Stützblech im Bereich der grundkörperseitigen und/oder deckelseitigen Schwenk/Gleit-Lagerelemente, nach einer Montage des Deckels, derart angeordnet ist, dass jeweils ein Ende des u-förmigen Stützblechs von innen gegen den Deckelarm drückt und dadurch den Sicherungsanschlag bildet, wobei das deckelseitige Schwenk/Gleit-Lagerelement einstückig mit dem Deckelarm ausgebildet ist.

14. Vorrichtung nach Anspruch 1, **dadurch gekennzeichnet, dass** ein grundkörperseitiges, L-förmiges Stützblech beidseitig im Bereich der grundkörperseitigen und/oder deckelseitigen Schwenk/Gleit-Lagerelemente, nach einer Montage des Deckels, derart angeordnet ist, dass jeweils ein Ende des L-förmigen Stützblechs von innen gegen den Deckelarm drückt und dadurch den Sicherungsanschlag bildet, wobei das deckelseitige Schwenk/Gleit-Lagerelement einstückig mit dem Deckelarm ausgebildet ist und das L-förmige Stützblech jeweils ein Kartenstopblech aufweist.

15. Vorrichtung nach Anspruch 13, **dadurch gekennzeichnet, dass** ein Kartenstopblech an einem hinteren Ende des Grundkörpers angeordnet ist.
